# EUROPEAN PATENT APPLICATION

(11) **EP 4 786 443 A1**
(43) Date of publication of application: **05.08.2026**
(21) Application number: 24871879.3
(22) Date of filing: 12.09.2024
(51) Int. Cl.: C04B 37/02, B22F 1/00, B22F 1/12, B22F 1/052, B23K 35/30, C22C 9/00

(54) **METAL/CERAMIC JOINED BODY, BRAZING MATERIAL, METHOD FOR PRODUCING METAL/CERAMIC JOINED BODY, AND METHOD FOR PRODUCING BRAZING MATERIAL**

(30) Priority: 28.09.2023 JP 2023168637
(71) Applicant: Proterial, Ltd., Tokyo 135-0061 (JP)
(72) Inventor: TAKANO, Shun, Koto-ku, Tokyo 135-0061 (JP); NOGAWA, Takashi, Koto-ku, Tokyo 135-0061 (JP); OKAMOTO, Atsushi, Koto-ku, Tokyo 135-0061 (JP); ANAI, Katsuki, Koto-ku, Tokyo 135-0061 (JP)
(74) Representative: Diehl & Partner
(86) International application number: PCT/JP2024/032640
(87) International publication number: WO 2025/070082

(57) **Abstract**

There is provided a metal-ceramic joint body, including: a metal component: a ceramic component joined to the metal component; and a joining layer on an interface between the metal component and the ceramic component, containing Cu and Mg, and further containing at least one active metal element selected from the group consisting of Ti, Zr, Hf, V, Nb, Ta, Cr, Mo, W, Ca, Y, Ce, La, Sm, Yb, Nd, Gd, and E, wherein non-layered MgO phases containing MgO are present in the joining layer.

## Description

### Technical Field

The present disclosure relates to a metal-ceramic joint body, a brazing material, a method for manufacturing a metal-ceramic joint body, and a method for manufacturing a brazing material.

### Background Art

Demand for a joint structure formed by joining a metal component and a ceramic component (metal-ceramic joint body) is increasing as an insulating circuit board for power electronics semiconductor devices, such as inverters and converters, and higher current density and smaller size are being promoted. This results in higher thermal stress, and there is a need for a circuit board with a long life and high strength, and ultimately for a high strength metal-ceramic joint body.

For joining of metal and ceramic, particularly in an insulating circuit board used in a semiconductor device, there are two types of joining methods in use: Direct Copper Bonding(DCB), which uses a eutectic of copper (Cu) and copper oxide (CuO) to directly heat-bond Cu and oxide ceramics; and Active Metal Brazing (AMB), which uses an active metal brazing material.

Among these, the AMB method has attracted attention as a joining method that can provide high joining strength, and an Ag-Cu-Ti brazing material is used as a typical joining material. For example, in Patent Document 1, a metal-ceramic joint body is obtained by placing an Ag-Cu-Sn-Ti brazing material on a ceramic board, layering Cu thereon, followed by applying heat treatment at 780°C or higher and 850°C or lower in a vacuum of 1.0 × 10⁻³ Pa or lower.

There have also been a case study regarding the brazing material composition not containing Ag, and for example, Patent Document 2 proposes a ceramic circuit board in which a copper plate and a ceramic board are joined using a Cu-Mg-Ti brazing material. According to Patent Document 2, a metal-ceramic joint body can be obtained by arranging a Cu plate and a ceramic board in a layered body, with an active metal foil and a magnesium (Mg) foil interposed therebetween, followed by applying heat treatment to the layered body at a temperature in a range of 700°C or more and 830°C or less.

### Citation List

### Patent Documents

[Patent Document 1] Japanese Patent No. 6743073
[Patent Document 2] International Publication No. 2021/033421

### Summary of the Invention

### Problem to be Solved by the Invention

At a joining interface between metal and ceramics by a joining method using an active metal brazing material, the active metal reacts with the ceramics to form an interfacial reaction layer, which provides a joint with a certain degree of high joining strength and reliability. However, when joining a metal component and a ceramic component, which have significantly different thermal expansion coefficients, strain and defect can increase in a joining layer placed between the metal component and the ceramic component, which can lead to a decrease in joining strength and reliability.

As in Patent Document 1, when Cu and aluminum nitride (AlN) or silicon nitride (Si₃N₄) are bonded with the Ag-Cu-Sn-Ti brazing material interposed therebetween, the thermal expansion coefficient of Si₃N₄ is lower than that of the joining layer placed between Cu and Si₃N₄. Therefore, there is a possibility that a problem may occur in reliability in a thermal cycle test (hereinafter referred to as thermal cycle reliability).

Further, as in Patent Document 2, by dispersing an active metal oxide phase with a low thermal expansion coefficient in the joining layer, the thermal stress caused by the difference in thermal expansion coefficient between the copper component and the ceramic component can be reduced. However, a magnesium oxide (MgO) layer, which is prone to brittle fracture, is formed between the copper component and the ceramic component, which may decrease the joining strength.

An object of the present disclosure is to provide a metal-ceramic joint body having high joining strength and high thermal cycle reliability.

### Means for solving the Problem

According to one aspect of the present invention, there is provided a metal-ceramic joint body including:
a metal component;
a ceramic component joined to the metal component; and
a joining layer on joining surfaces of the metal component and the ceramic component, the joining layer containing Cu and Mg and further containing at least one active metal element selected from the group consisting of Ti, Zr, Hf, V, Nb, Ta, Cr, Mo, W, Ca, Y, Ce, La, Sm, Yb, Nd, Gd, and Er,
wherein non-layered MgO phases containing MgO are present in the joining layer.

According to another aspect of the present disclosure, there is provided a brazing material that is used to join a metal component and a ceramic component, containing 50 at.% or more and 80 at.% or less of Cu, 5 at.% or more and 20 at.% or less of Mg, and a total of 0.1 at.% or more and 10 at.% or less of at least one active metal element selected from the group consisting of Ti, Zr, Hf, V, Nb, Ta, Cr, Mo, W, Ca, Y, Ce, La, Sm, Yb, Nd, Gd, and Er,
wherein the Mg is contained at least a part of which is in the form of MgO, and
the Cu and the Mg are contained with an average particle size of 45 µm or less.

According to further another aspect of the present disclosure, there is provided a method for manufacturing a metal-ceramic joint body, the method including:
arranging a metal component and a ceramic component in a layered body, with a brazing material interposed therebetween; and
heating and holding the layered body of the metal component and the ceramic component while applying pressure in a layering direction,
wherein a hydrogen reduction treatment is applied to the brazing material using a material as the brazing material containing 50 at.% or more and 80 at.% or less of Cu, 5 at.% or more and 20 at.% or less of Mg, and a total of 0.1 at.% or more and 10 at.% or less of at least one active metal element selected from the group consisting of Ti, Zr, Hf, V, Nb, Ta, Cr, Mo, W, Ca, Y, Ce, La, Sm, Yb, Nd, Gd, and Er, with the Mg contained at least a part of which is in the form of MgO, and the Cu and the Mg contained with an average particle size of 45 µm or less.

### Advantageous Effects of Invention

According to the present disclosure, there is provided a metal-ceramic joint body having high joining strength and high thermal cycle reliability.

### Brief Description of the Drawings

[Fig. 1] Fig. 1 is a partial cross-sectional schematic view of a metal-ceramic joint body 100 according to one embodiment of the present disclosure.
[Fig. 2] Fig. 2 is a cross-sectional picture (SEM image) of a first layer 31 and its surrounding.
[Fig. 3] Fig. 3 is an enlarged picture (STEM image) of MgO phases 33.
[Fig. 4] FIG. 4 shows an electron energy loss (EELS) spectrum of the MgO phases 33 analyzed by a scanning transmission electron microscope.
[Fig. 5] Fig. 5 (a) is a view schematically showing shear stress applied to a joining layer 30, and FIG. 5 (b) is a view schematically showing tensile stress applied to the joining layer 30.
[Fig. 6] Fig. 6 (a) is a view showing a state in which a metal component 10 and a ceramic component 20 are arranged with a brazing material 50 interposed therebetween, FIG. 6 (b) is a view showing a state in which a layered body of the metal component 10 and the ceramic component 20 is heated while applying pressure, and FIG. 6 (c) is a view showing the manufactured metal-ceramic joint body 100.
[Fig. 7] Fig. 7 is a cross-sectional picture of a joining layer in which large voids 34L occur.
[Fig. 8] Fig. 8 is a view schematically showing a state in which a shear strength test is performed.

### Description of Embodiments

### <One embodiment of the present disclosure>

Hereinafter, one embodiment of the present disclosure will be described with reference to the above-described drawings. Note that the drawings used in the following description are all schematic. The dimensions and proportions of the elements shown in the drawings do not necessarily correspond to those of reality. Further, the dimensions and proportions of the elements do not necessarily match between the drawings. In this specification, "A to B" means a numerical range of "A or more and B or less."

### (1) Structure of the metal-ceramic joint body

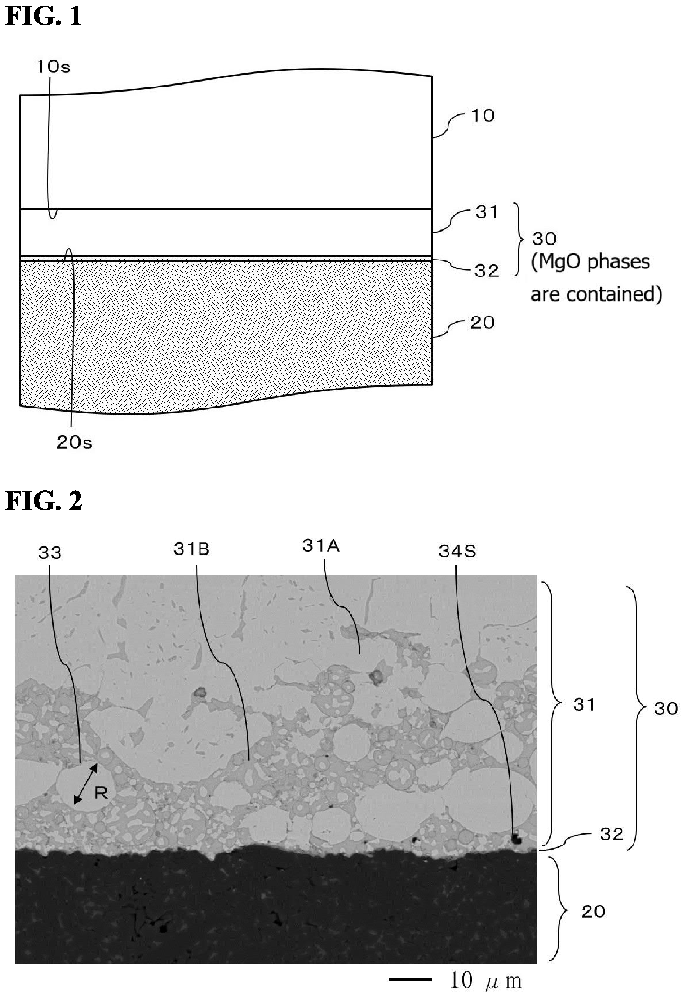

As shown in Fig. 1, the metal-ceramic joint body 100 includes a metal component 10, a ceramic component 20 joined to the metal component 10, and a joining layer 30 between joining surfaces of the metal component 10 and the ceramic component 20.

The metal component 10 is composed of, for example, pure copper, copper alloy, pure nickel, nickel alloy, etc. As the pure copper, for example, oxygen-free copper, tough pitch copper, phosphorus-deoxidized copper, etc., can be used. As the copper alloy, an alloy containing copper (Cu) as a main element and containing at least one element selected from the group consisting of zinc (Zn), tin (Sn), phosphorus (P), aluminum (Al), beryllium (Be), cobalt (Co), nickel (Ni), iron (Fe), and manganese (Mn) can be used. There is no particular limitation in the shape or dimension of the metal component 10, but when the metal-ceramic joint body 100 is used as a constituent material of an insulating circuit board, it can be, for example, a flat plate having a thickness in a range of 0.1 mm or more and 4.0 mm or less. This embodiment shows a case where the metal component 10 is composed of pure copper.

The ceramic component 20 is composed of, for example, silicon nitride (Si₃N₄), aluminum nitride (AlN), silicon carbide (SiC), aluminum oxide (Al₂O₃), diamond, etc. There is no particular limitation in the shape or dimension of the ceramic component 20. However, when the metal-ceramic joint body 100 is used as a constituent material of an insulating circuit board, the ceramic component 20 may be, for example, a flat plate having a thickness in a range of 0.2 mm or more and 4.0 mm or less. In this embodiment, the ceramic component 20 is composed of silicon nitride (Si₃N₄).

A joining layer 30 is formed between the metal component 10 and the ceramic component 20 along joining surfaces 10s, 20s thereof. The joining layer 30 contains copper (Cu) and magnesium (Mg), and further contains at least one active metal element selected from the group consisting of titanium (Ti), zirconium (Zr), hafnium (Hf), vanadium (V), niobium (Nb), tantalum (Ta), chromium (Cr), molybdenum (Mo), tungsten (W), calcium (Ca), yttrium (Y), cerium (Ce), lanthanum (La), samarium (Sm), ytterbium (Yb), neodymium (Nd), gadolinium (Gd), erbium (Er), etc. When the ceramic component 20 is composed of Si₃N₄ or AlN, it is preferable to use Ti, V, Nb, Cr, Mo, or Ca as the active metal element, and Ti is particularly preferable. This embodiment shows a case where Ti is used as the active metal element.

As described below, the joining layer 30 is formed by a reaction of a brazing material 50 containing Cu, Mg, and the above-described active metal elements in predetermined proportions, with the metal component 10 and the ceramic component 20, respectively. The brazing material 50 used in this embodiment is a Cu-Mg based brazing material not containing Ag, but containing, for example, 50 to 80 at.% of Cu, 5 to 20 at.% of Mg, and a total of 0.1 to 10 at.% of active metal element (Ti in this embodiment). In other words, the brazing material 50 used in this embodiment contains 5 to 20 at.% of Mg, a total of 0.1 to 10 at.% of active metal elements, with a balance (excluding inevitable impurities) being Cu. By using such a brazing material 50 and performing joining by a method described below, the joining layer 30 in this embodiment exhibits the following various features.

As shown in Fig. 1, the joining layer 30 has a layered body of a first layer 31 that defines an interface with the metal component 10 and a second layer 32 that defines an interface with the ceramic component 20 and is in contact with the first layer 31. The thickness of the first layer 31 is, for example, 1 µm or more and 2000 µm or less, and the thickness of the second layer 32 is, for example, 1 nm or more and 2000 nm or less.

Fig. 2 is a cross-sectional picture (SEM image) of the first layer 31 and its surrounding. As shown in Fig. 2, the first layer 31 has a solid solution phase 31A (light gray portion in the figure) and a compound phase 31B (dark gray portion in the figure).

The solid solution phase 31A is mainly composed of a solid solution in which Mg is dissolved in Cu crystals. The solid solution phase 31A may further contain active metal elements such as Ti contained in the brazing material 50, and Si, Al, etc., contained in the ceramic component 20.

The compound phase 31B is mainly composed of an intermetallic compound containing Cu and Mg, for example, a compound represented by a composition formula MgCu₂ (hereinafter also referred to as a Cu-Mg alloy). On the compound phase 31B, an intermetallic compound containing the above-described active metal element may be further precipitated. When Ti is selected as the active metal element, examples of the intermetallic compound containing the active metal element include at least one compound selected from the group of compounds represented by composition formulas Cu₄Ti, Cu₃Ti₂, Cu₂Ti, Cu₄Ti₃, CuTi, CuTi₂, Ti₅Si₃, Ti₃Si, CuTiSi, etc.

As shown in Fig. 2, the joining layer 30 (first layer 31) contains non-layered MgO phases 33 containing magnesium oxide (MgO) (for example, the outer periphery of a region indicated by radius R in Fig. 2). In other words, for example, in the joining layer 30 (first layer 31), the MgO phases 33 are present without being concentrated in a specific region, but with being dispersed in both a thickness direction and a surface direction (toward joining surfaces 10s and 20s) of the joining layer 30. Further, as shown in Fig. 2, it is preferable that the MgO phases 33 do not form a large lump but is preset in such a manner as extending in a curved shape. The presence of the MgO phases 33 in the joining layer 30 (particularly the first layer 31) in this manner can mitigate the generation of thermal stress caused by the difference in thermal expansion coefficient between the metal component 10 and the ceramic component 20, thereby increasing the joining strength and thermal cycle reliability. In Fig. 1, illustration of the MgO phases 33 are omitted.

As shown in Fig. 2, the MgO phases 33 are preferably present so as to surround (in a shell shape) at least one of the solid solution phase 31A and the compound phase 31B. The presence of the MgO phases 33 in this manner can reduce the occurrence of thermal stress between the solid solution phase 31A and the compound phase 31B, thereby further increasing the joining strength and thermal cycle reliability. The phrase "the MgO phases 33 are preferably present so as to surround at least one of the solid solution phase 31A and the compound phase 31B" includes not only a case where the MgO phases 33 form a closed space (a closed curve in the cross-sectional picture) and completely surrounds a certain region, but also a case where the MgO phases 33 are not present in a part of the outer periphery of the region. In this specification, for example, when the MgO phases 33 cover 80% or more of the surface area of the region (the outer periphery in the cross-sectional picture), the MgO phases 33 are expressed as being present so as to surround the region.

Within the region surrounded by the MgO phases 33, it is preferable that the proportion of the solid solution phase 31A (e.g., area ratio in the cross section) is 90% or more, or the proportion of the compound phase 31B (e.g., area ratio in the cross section) is 90% or more. This means that the MgO phases 33 are present in a large amount at a boundary between the solid solution phase 31A and the compound phase 31B. The presence of the MgO phases 33 in this manner can reduce the occurrence of thermal stress between the solid solution phase 31A and the compound phase 31B, thereby further increasing the joining strength and thermal cycle reliability.

The diameter R of the region surrounded by the MgO phases 33 are preferably, for example, 1 µm or more and 20 µm or less. This can further increase the joining strength and thermal cycle reliability. The diameter R may be a circle-equivalent diameter of the region surrounded by the MgO phases 33 in the cross-sectional picture as shown in Fig. 2.

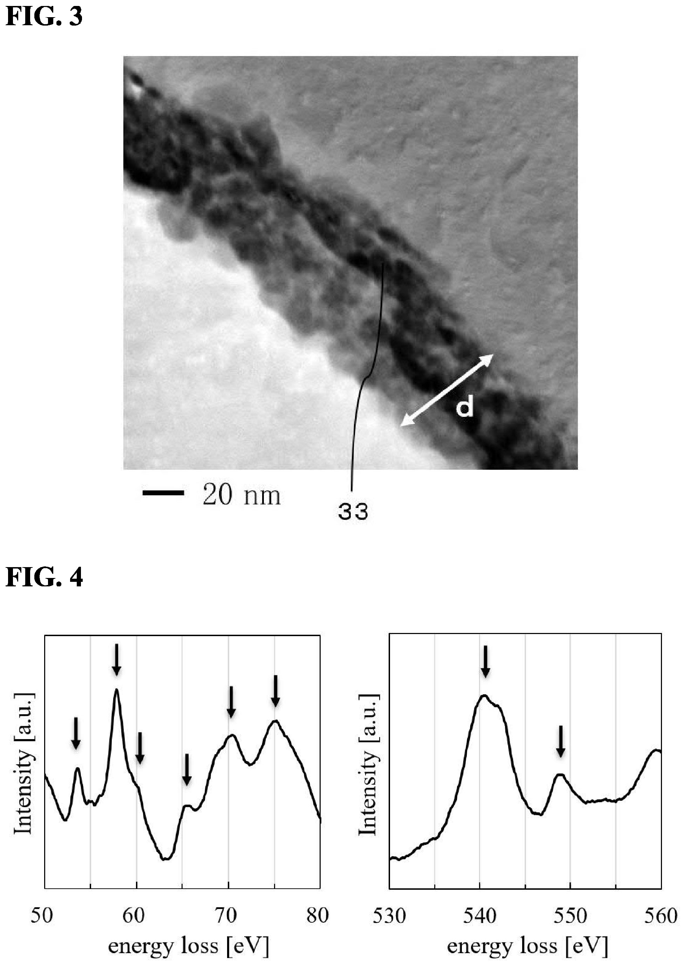

Fig. 3 is an enlarged picture (STEM image) of the MgO phases 33. As shown in Fig. 3, the MgO phases 33 are preferably formed by a large number of MgO particles that are in succession together. The thickness d of the MgO phases 33 are preferably, for example, 10 nm or more and 1 µm or less. The particle size of the MgO particles in the MgO phases 33 is preferably, for example, 10 nm or more and 30 nm or less, which can further increase the joining strength and thermal cycle reliability.

In the first layer 31, the MgO phases 33 are preferably present in a uniformly dispersed state. Specifically, for example, when the area ratio of the MgO phases 33 in a 500 µm² region of the cross section of the first layer 31 is measured multiple times (e.g., three times) in different observation fields, it is preferable that the difference between maximum and minimum values of the area ratio of the MgO phases 33 be within 5%. This increases the joining strength and thermal cycle reliability. For the measurement of the area ratio of the MgO phases 33 in the cross section of the first layer 31, for example, the area ratio may be calculated by image analysis of a cross-sectional picture as shown in Fig. 2, or the area of the MgO phases 33 can be calculated by multiplying the sum of the circle-equivalent diameters (R) of each region surrounded by the MgO phases 33 by the average thickness (d) of the MgO phases 33.

In the cross section of the first layer 31 (for example, in a region of a cross section of 500 µm²), the area ratio of the MgO phases 33 are preferably, for example, 0.4% or more and 15% or less. If the area ratio of the MgO phases 33 is less than 0.4%, the effect of increasing the joining strength may be insufficient. In contrast, by setting the area ratio of the MgO phases 33 to 0.4% or more, the joining strength can be sufficiently increased. On the other hand, if the area ratio of the MgO phases 33 exceeds 15%, the effect of increasing the thermal cycle reliability may be reduced. In contrast, by setting the area ratio of the MgO phases 33 to 15% or less, the thermal cycle reliability can be sufficiently increased.

Fig. 4 shows an example of an electron energy loss (EELS) spectrum of the MgO phases 33 analyzed by a scanning transmission electron microscope. As shown in Fig. 4, when the MgO phase 33 is subjected to EELS analysis, it can be confirmed that the spectrum has peaks (indicated by arrows in the figure) in the ranges of 50 to 80 eV and 530 to 560 eV.

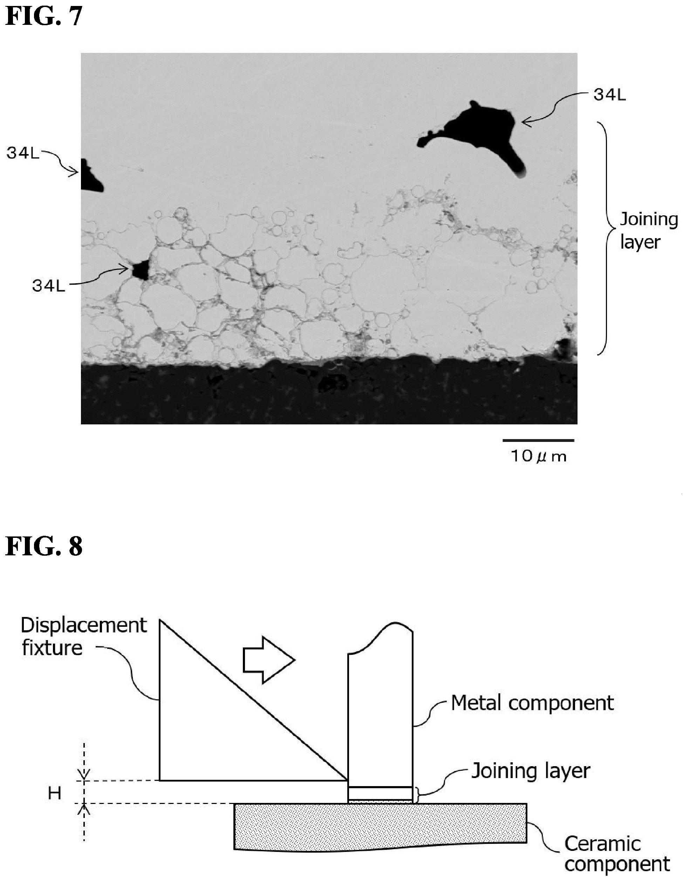

When joining the metal component 10 and the ceramic component 20 using a brazing material containing Mg, there is a concern that the evaporation of the Mg contained in the brazing material may cause voids or pinholes (hereinafter collectively referred to as voids) to occur in the first layer 31. Fig. 7 shows a cross-sectional picture of the joining layer including voids 34L that occur due to evaporation of Mg, etc. In Fig. 7, within a visual field of approximately 3500 µm², the presence of the voids 34L can be confirmed, having a circle-equivalent diameter (the diameter of a circle having an area equal to the cross-sectional area of the void 34L) of 8 µm or more. The circle-equivalent diameter of the void 34L in the upper right of Fig. 7 is about 9 to 10 µm, the circle-equivalent diameter of the void 34L in the upper left is 5 µm or more, and the circle-equivalent diameter of the void 34L in the lower left is about 3 to 4 µm.

The presence of such large voids 34L is a factor that decreases the joining strength between the metal component 10 and the ceramic component 20. Here, when a brazing material containing only Mg and the above-described active metal element (without any copper) is used for joining the metal component 10 and the ceramic component 20, the Mg contained in the brazing material evaporates significantly, and the occurrence of the voids 34L with a circular equivalent diameter exceeding 8 µm within the first layer 31 is unavoidable, resulting in a significant decrease in the joining strength between the metal component 10 and the ceramic component 20. In this case, the metal component 10 and the ceramic component 20 cannot be joined together.

In order to solve the above-described problem, this embodiment succeeds in sufficiently suppressing the occurrence of large voids 34L, for example, voids 34L having a circle-equivalent diameter of 8 µm or more, in the joining layer 30, by using the brazing material 50 containing not only Mg and an active metal element but also Cu in the above-described ratio during joining.

For example, in Fig. 2, within a visual field of approximately 2000 µm², no voids 34L with a circle-equivalent diameter of 8 µm or more were observed, and only one void 34S with a circle-equivalent diameter of approximately 1 to 2 µm was observed.

As described above, the joining layer 30 in this embodiment has an extremely excellent feature that, when observing the first layer 31 in the cross section perpendicular to the joining surfaces 10s and 20s, not a single void 34L having a circle-equivalent diameter of 8 µm or more is observed within any visual field of approximately 10,000 µm². In other words, when the first layer 31 is observed in the cross section perpendicular to the joining surfaces 10s and 20s, the number of voids having a circle-equivalent diameter of 8 µm or more is less than one per 10,000 µm².

In this embodiment, when observing the first layer 31 in the cross section perpendicular to the joining surfaces 10s and 20s, even if voids 34S are observed, their circle-equivalent diameter is less than 8 µm, for example, less than 5 µm, and preferably less than 3 µm.

Further, in this embodiment, when observing the first layer 31 in the cross section perpendicular to the joining surfaces 10s and 20s, there can be a case where the voids 34S having a circle-equivalent diameter of less than 8 µm, for example, voids 34S having a circle-equivalent diameter of more than 2 µm and less than 8 µm, are observed, but the number of such particles is extremely small, 10 or less, preferably 5 or less, within any visual field of approximately 10,000 µm². Further, in this embodiment, there can also be a case where the voids 34S with a circle-equivalent diameter of 1 µm or more and 2 µm or less are observed, but the number is very small, 20 or less, preferably 10 or less, within any field of view of approximately 10,000 µm².

In the joining layer 30, the second layer 32 that defines the interface with the ceramic component 20 contains titanium nitride (TiN), which is a nitride of an active metal element (Ti in this embodiment), as its main component (for example, 50 at.% or more is TiN). When the ceramic component 20 is composed of silicon nitride, the second layer 32 may contain a compound represented by a composition formula Ti₅Si₃. The active metal compound (for example, TiN) in the second layer 32 is present, for example, in the form of a layer along an interface with the ceramic component 20.

The second layer 32 may contain nitride crystals X represented by a composition formula MgSiN₂. The nitride crystals X may be unevenly distributed in the second layer 32 near the interface with the ceramic component 20, for example. When the thickness of the second layer 32 is Tx, the thickness of the region where the nitride crystals X are unevenly distributed is 5% to 50%, preferably 10% to 40% of Tx. For example, when the thickness Tx of the second layer 32 is about 250 nm, the thickness of the region where the nitride crystals X are unevenly distributed is about 10 to 150 nm, preferably about 20 to 100 nm. The presence of the nitride crystals X can be confirmed, for example, in such a way that the second layer 32 is subjected to crystal analysis by a precession electron diffraction method using a transmission electron microscope (TEM-PED). In this embodiment, the second layer 32 preferably does not substantially contain nitride crystals Y represented by a composition formula Mg₃N₂. In this embodiment, the nitride crystals Y are not confirmed even when analyzed by the TEM-PED method.

In this embodiment, the second layer 32 may contain MgO. Since MgO has a lattice constant close to that of TiN and Cu, the containing of MgO in the second layer 32 can reduce the stress caused by lattice constant mismatch, thereby increasing the joining strength between the metal component 10 and the ceramic component 20.

In this embodiment, the second layer 32 may further contain a silicide or an aluminide of the active metal element. When the ceramic component 20 is composed of Si₃N₄, the second layer 32 may contain the silicide of the active metal element, such as Ti₅Si₃, and when the ceramic component 20 is composed of AlN, the second layer 32 may contain the aluminide of the active metal element, such as TiAl. Hereinafter, explanation will be given for a case where the second layer 32 contains Ti₅Si₃ as an example. The silicide or aluminide of the active metal element, such as Ti₅Si₃, may be present in, for example, a region of the second layer 32 from the interface with the first layer 31 to 60% of the thickness Tx of the second layer 32.

In the second layer 32, it is preferable that MgO is not substantially dispersed in Ti₅Si₃ (i.e., in the silicide or aluminide of the active metal element). In this specification, "MgO is not substantially dispersed" may refer not only to a case where MgO is not dispersed at all in a target region, but also to a case where only a trace amount of MgO (e.g., less than 5% of the ratio of MgO contained in the second layer 32) is dispersed. It is also preferable that the above-described nitride crystals X are not substantially dispersed in Ti₅Si₃ (that is, in the silicide or aluminide of the active metal element).

The second layer 32 may further contain a Cu phase. When the second layer 32 contains the Cu phase, it is preferable that at least a part of the MgO in the second layer 32 be dispersed (dispersed in an island-like manner) in the Cu phase. Since MgO has a lattice constant close to that of Cu, the joining strength between the metal component 10 and the ceramic component 20 can be efficiently increased by dispersing MgO in the Cu phase. The Cu phase of the second layer 32 may be a phase consisting of Cu alone, or, similarly to the solid solution phase 31A of the first layer 31, may be a phase whose main component is a solid solution in which Mg is solid-dissolved in Cu crystals.

The nitride of the active metal element, such as TiN, may be dispersed (dispersed in an island-like manner) near the interface between the first layer 31 and the second layer 32. TiN particles present near the interface between the first layer 31 and the second layer 32 may be dispersed with a diameter of, for example, 1 to 30 nm and at intervals of about 50 to 300 nm. Since TiN may be accompanied by MgO, stress caused by the lattice constant mismatch between Cu in the first layer 31 and TiN can be reduced, thereby further increasing the joining strength between the metal component 10 and the ceramic component 20.

By virtue of these various features, this embodiment succeeds in significantly increasing the joining strength and thermal cycle reliability between the metal component 10 and the ceramic component 20.

Specifically, the shear strength of the joining layer 30 in this embodiment is 10 MPa or more, preferably 40 MPa or more. Further, the tensile strength of the joining layer 30 in this embodiment is 17.3 MPa or more, preferably 86.6 MPa or more.

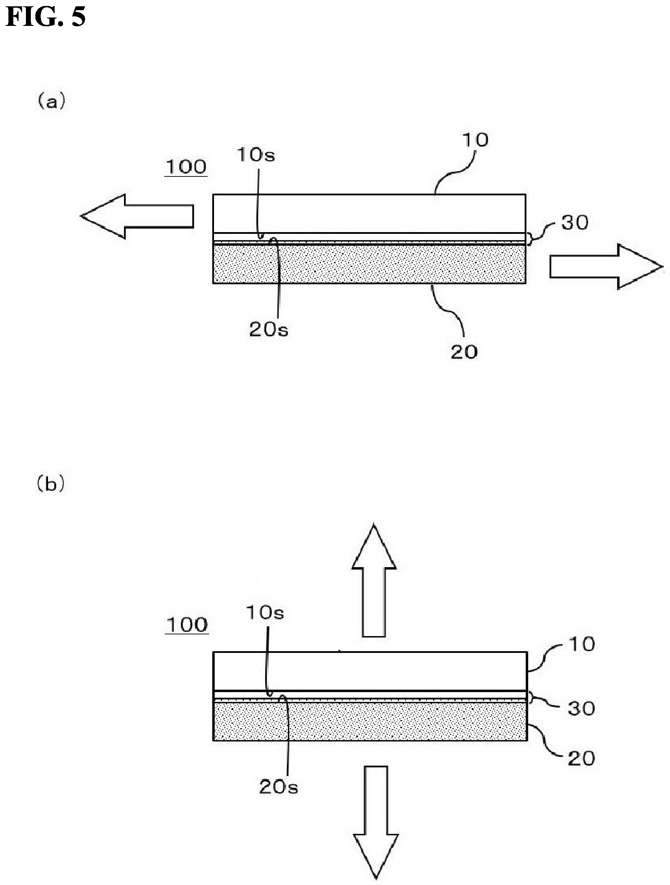

The shear strength of the joining layer 30 here means, as shown in Fig. 5 (a), the magnitude of the shear stress per unit area required to break (shear fracture) the joining layer 30, when stress (shear stress) is applied to the joining layer 30 so as to displace the metal component 10 and the ceramic component 20 in opposite directions along a direction parallel to the joining surfaces 10s and 20s. The tensile strength of the joining layer 30 here means, as shown in Fig. 5 (b), the magnitude of the tensile stress per unit area required to cause fracture (delamination failure) of the joining layer 30, when stress (tensile stress) is applied to the joining layer 30 so as to pull the metal component 10 and the ceramic component 20 apart from each other in a direction perpendicular to the joining surfaces 10s and 20s.

Further, the metal-ceramic joint body 100 of this embodiment has high thermal cycle reliability. Specifically, for example, when 200 cycles of a thermal cycle consisting of 30 minutes at -50°C followed by 30 minutes at 150°C, were performed, no cracking of the ceramic component 20 and no peeling of the metal component 10 were observed, thus demonstrating high thermal cycle reliability. The presence or absence of cracking in the ceramic component 20 and peeling of the metal component 10 can be confirmed by, for example, a scanning acoustic tomography (SAT) inspection.

### (2) Method for manufacturing the metal-ceramic joint body

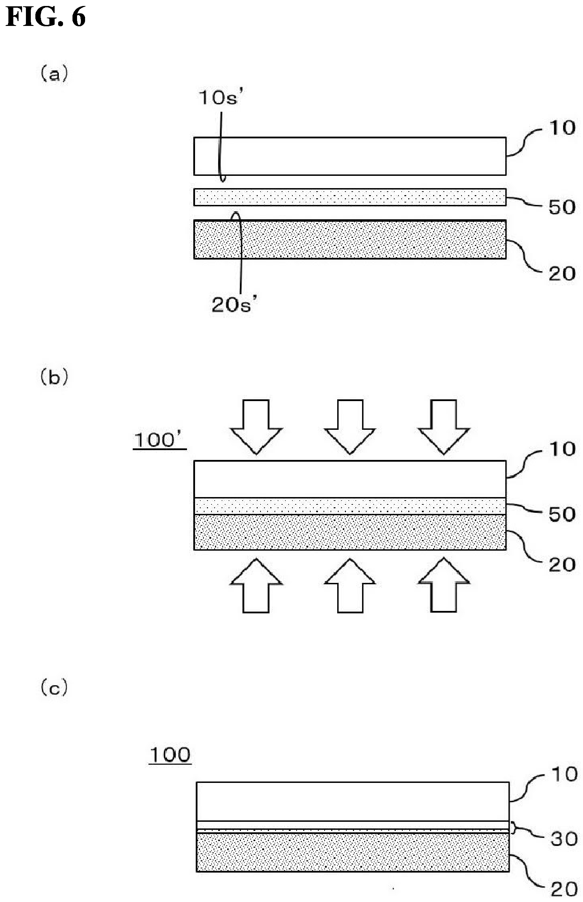

Next, a method for manufacturing the above-described metal-ceramic joint body 100 will be described with reference to Figs. 6 (a) to 6 (c).

First, as shown in Fig. 6 (a), the metal component 10 and the ceramic component 20 are arranged in a layered body, with a brazing material 50 interposed therebetween.

As described above, the brazing material that is a Cu-Mg-based brazing material without containing Ag, and for example, a material containing 50 at.% or more and 80 at.% or less of Cu, 5 at.% or more and 20 at.% or less of Mg, and a total of 0.1 at.% or more and 10 at.% or less of the above-described active metal element (Ti in this embodiment) can be used as the brazing material 50.

The Cu contained in the brazing material 50 acts to impart the various features described above to the joining layer 30 formed by the reaction of the brazing material 50 with the metal component 10 and the ceramic component 20. Further, when joining the metal component 10 and the ceramic component 20, the Mg contained in the brazing material 50 acts to increase wettability between the metal component 10 and the brazing material 50 and wettability between the ceramic component 20 and the brazing material 50 in a balanced manner. Further, the active metal element contained in the brazing material 50 reacts with the ceramic component 20 to form the second layer 32, which acts to increase the joining strength between the joining layer 30 and the ceramic component 20.

When the Mg content in the brazing material 50 is less than 5 at. %, or the active metal element content is less than 0.1 at. %, and the Cu content exceeds 80 at.%, there is a possibility that the above-described effect of adding Mg or active metal elements can not be obtained.

Also, when the Mg content in the brazing material 50 exceeds 20 at.%, or when the total active metal element content exceeds 10 at.%, and the Cu content is less than 50 at.%, there is a possibility that the above-described effect by adding Cu can not be obtained.

In the brazing material 50, Cu can be contained in at least one of the following forms: a simple substance (pure Cu), a hydride (CuH), an intermetallic compound with Mg (MgCu), and an intermetallic compound with an active metal element (e.g., a Cu-Ti compound). When Ti is selected as the active metal element, for example, it can be contained in at least one form of a simple substance (pure Ti), a hydride (TiH₂), an intermetallic compound with Cu, or an intermetallic compound with Mg.

In the brazing material 50 of this embodiment, at least a part of Mg needs to be contained in the form of an oxide (MgO). For example, it is preferable that 10 to 50 at.% of the Mg contained in the brazing material 50 is contained in the form of MgO. This allows the non-layered MgO phases 33 to be formed during joining. Further, the Mg contained in the brazing material 50 may contain, in addition to MgO, other forms such as a simple substance (pure Mg), a hydride (MgH₂), an intermetallic compound with Cu (MgCu₂), or a compound with an active metal element (e.g., an Mg-Ti compound). Specifically, for example, by previously applying a surface oxidation treatment to simple Mg, Mg whose surface is covered with MgO can be contained in the brazing material 50.

In the brazing material 50, Cu and Mg need to be contained either as a simple substance or as an alloy containing Cu and Mg, with particle size reduction treatment (for example, with an average particle size (D50) of 45 µm or less). This increases the surface area and makes it easier to take in oxygen, thereby allowing the non-layered MgO phases 33 to be formed. The lower limit of the average particle size of Cu and Mg is not particularly limited, but is, for example, 5 µm or more. The average particle size can be measured using a laser diffraction particle size distribution analyzer. In this specification, D50 is regarded as the average particle size.

The brazing material 50, before being joined, needs to be heat-treated (hydrogen reduction treatment) in a 100% hydrogen atmosphere or a non-oxidizing (inert) atmosphere containing 3 vol.% or more of hydrogen. Due to the hydrogen reduction treatment applied to the brazing material 50, the proportion of MgO in the brazing material 50 can be increased. This makes it easier for the non-layered MgO phases 33 to be formed during joining.

The brazing material 50 may be in the form of a powder, a foil, or a paste. From the viewpoint of facilitating the formation of the MgO phases 33 as shown in Fig. 2, it is preferably in the form of a powder or a paste. When the paste form is used, alcohols such as terpineol and butanediol or toluene can be used as a main solvent, polyvinyl alcohol, ethyl cellulose, polymethacrylic acid, polyacrylic, etc., can be used as a binder, and cationic, anionic, or nonionic surfactants can be used as a surfactant.

The method for placing the brazing material 50 on intended joining surfaces 10s', 20s' of the metal component 10 and the ceramic component 20 can be any known method such as screen printing, transfer, dispensing, inkjet, spray coating, sputtering, vapor deposition, etc.

Next, as shown in FIG. 6 (b), the layered body 100' of the metal component 10 and the ceramic component 20 arranged with the brazing material 50 interposed therebetween, is heated and held in a predetermined atmosphere while applying pressure in a layering direction. The predetermined atmosphere may be any one of a vacuum atmosphere (reduced pressure atmosphere), an inert gas atmosphere, and a reducing atmosphere. The oxygen concentration can be adjusted by introducing an inert gas such as nitrogen (N₂). Further, when the MgO phases 33 are formed, oxygen around the layered body 100' is taken away, making Cu, Ti, etc., less susceptible to oxidation, and thus high joining strength can be maintained.

The heating temperature during joining may be, for example, equal to or higher than the melting point of the brazing material 50 and equal to or lower than the melting point of the metal component 10. Further, it is preferably 115% or less of the melting point (absolute temperature) of the brazing material 50, and more preferably 101% or more and 110% or less of the melting point (absolute temperature) of the brazing material 50. This increases the diffusibility of the active metal element, making it easier to form the second layer 32. When using the brazing material 50 of this embodiment, the heating temperature is preferably set to, for example, 735°C or higher and 900°C or lower. As a heat treatment furnace used for joining, a known furnace such as a stationary batch furnace, a multichamber furnace, or a belt conveyor furnace can be used.

Other conditions for joining include the following:
Oxygen concentration: 0.01 ppm to 1000 ppm
Pressure: 0.5 kPa or more
Holding time: No particular limitation, but for example, 3 minutes or more and 120 minutes or less

During heating, a liquid phase needs to be formed in a part of the brazing material 50, and in addition, the active metal element needs to be melted in the liquid phase. This state can be created by setting the heating temperature to 735°C or higher. However, if the heating temperature is too high, Mg evaporates significantly, which may make it difficult to form a liquid phase or cause voids in the resulting joining layer 30. Such a problem can be avoided by setting the heating temperature to 900°C or lower. By applying a pressure of 0.5 kPa or more, a tight contact state can be maintained between the metal component 10 and the ceramic component 20 with the brazing material 50 interposed therebetween, thereby increasing the joining strength between the metal component 10 and the ceramic component 20. The pressure is not particularly limited, but it can be set to, for example, about 20 kPa.

Thereafter, the heated layered body 100' is cooled, resulting in a metal-ceramic joint body 100 having the various features described above, as shown in Fig. 6 (c).

When using the metal-ceramic joint body 100 as an insulating circuit board, etching may be performed after placing an etching resist on the metal component 10 to form a circuit pattern on the metal component 10. The type of the etching resist is not particularly limited, and for example, known resists such as heat-curable and ultraviolet-curable resists can be used. The method for placing the etching resist is not particularly limited, and methods such as placing a film-like resist film, screen printing, and inkjet coating can be used. Further, for the metal-ceramic joint body 100, after removing the unnecessary portion of the metal component 10 by etching, the unnecessary portion of the joining layer 30 may be further removed.

### (3) Effects

According to this embodiment, one or more of the following effects can be obtained.
(a) In this embodiment, non-layered MgO phases 33 containing magnesium oxide (MgO) are present in the joining layer 30 (first layer 31). The presence of the non-layered MgO phases 33 in the joining layer 30 (particularly the first layer 31) can reduce the occurrence of thermal stress caused by the difference in thermal expansion coefficient between the metal component 10 and the ceramic component 20, thereby increasing the joining strength and thermal cycle reliability.
(b) In this embodiment, the MgO phases 33 are preferably present so as to surround at least one of the solid solution phase 31A and the compound phase 31B. The presence of the MgO phases 33 in this manner can reduce the occurrence of thermal stress between the solid solution phase 31A and the compound phase 31B, thereby further increasing the joining strength and thermal cycle reliability.
(c) In this embodiment, it is preferable that the proportion of the solid solution phase 31A in the region surrounded by the MgO phases 33 is 90% or more, or the proportion of the compound phase 31B is 90% or more. This means that the MgO phases 33 is present in large amounts at a boundary between the solid solution phase 31A and the compound phase 31B. The presence of the MgO phases 33 in this manner can reduce the occurrence of the thermal stress between the solid solution phase 31A and the compound phase 31B, thereby further increasing the joining strength and thermal cycle reliability.
(d) In this embodiment, the joining strength between the metal component 10 and the ceramic component 20 can be significantly increased. For example, the shear strength of the joining layer 30 can be 10 MPa or more, preferably 40 MPa or more. Further, the tensile strength of the joining layer 30 can be 17.3 MPa or more, preferably 86.6 MPa or more.
(e) In this embodiment, the thermal cycle reliability of the metal-ceramic joint body 100 can be significantly increased. For example, when 200 cycles of thermal cycling at -50°C for 30 minutes and 150°C for 30 minutes are performed, no cracking of the ceramic component 20 and no peeling of the metal component 10 are observed, achieving high thermal cycle reliability.

### <Other embodiments of the present disclosure>

The embodiments of the present disclosure have been specifically described above. However, the present disclosure is not limited to the above embodiments and can be modified in various ways without departing from the spirit and scope of the present disclosure.

The metal-ceramic joint body 100 in this embodiment is not limited to use as an insulated circuit board, but can be widely applied to various uses, such as heat sinks and components of internal combustion engines and power generating machines. In these cases, the same effects as those of the above-described embodiment can be obtained.

### Examples

### (Preparation of Samples 1 to 38)

As ceramic components, a Si₃N₄ substrate measuring 50 mm × 50 mm × 0.32 mm, an AlN substrate measuring 50 mm × 50 mm × 0.635 mm, and an Al₂O₃ substrate measuring 50 mm × 50 mm × 0.635 mm were prepared. As metal components, a Cu plate measuring 48 mm × 48 mm × 0.8 mm was prepared for the Si₃N₄ substrate, and a Cu plate measuring 48 mm × 48 mm × 0.3 mm was prepared for the AlN substrate and the Al₂O₃ substrate. The brazing material to be used was a paste made by mixing Cu, Mg, and Ti in a predetermined ratio. Cu and Mg powders to be used had an average particle size of 45 µm or less. Mg with its surface previously being subjected to a surface oxidation treatment to produce a MgO layer, was used as the Mg. In preparing the paste, polyethylene glycol and diethylene glycol monobutyl ether having a molecular weight of 400 or less were used as solvents, and the ratio of the solvent in the paste was 9 mass %. The element mixing ratio (weight ratio) of Cu : Mg : Ti in the paste was as shown in Tables 1 to 3. This paste was applied by screen printing onto the surface of the ceramic component to be joined, and a metal component was placed directly on top of the applied paste film, followed by hydrogen reduction treatment in a 100% hydrogen atmosphere. Thereafter, a pressure of 8 kPa was applied in a layering direction, and heat treatment was applied for 60 minutes in a vacuum atmosphere at a predetermined joining temperature shown in Tables 1 to 3. Thus, Samples 1 to 36 were prepared.

Sample 37 was prepared under the same conditions as Sample 1, except that Cu and Mg powders with an average particle size of approximately 100 µm were used as the raw materials for the brazing material and the surface oxidation treatment for Mg and the hydrogen reduction treatment for the brazing material were not performed.

For Sample 38, Cu was not used as the raw material of the brazing material, and a paste made by mixing Mg and Ti powders in an element mixing ratio of 97 : 3 was used. The other conditions were the same as those for Sample 29.

### (Presence or absence and state of MgO phases)

The presence or absence and state of the MgO phases in the joining layer (first layer) was determined by observing and analyzing the cross section of the joint body using a scanning electron microscope (SEM) and a scanning transmission electron microscope (STEM). From the obtained metal-ceramic joint body, approximately 10 mm × 10 mm of any randomly selected piece was cut out, embedded in resin, and the cross-section of the joint body was polished to prepare a sample for SEM observation. Using focused ion beam (FIB) technique, the sample for STEM observation was prepared, ensuring that an area where MgO phases are likely to be present is included in the joining layer. Using STEM, a 5µm × 5µm area was observed with an accelerating voltage of 200 kV and a magnification of 400,000 ×, and a spectrum was analyzed using electron energy loss spectroscopy (EELS), and peaks were observed as shown in Fig. 4, and when it is determined that non-layered MgO phases have been formed, this was indicated with "○" in Tables 1 to 3, and when these peaks were not observed, it was determined that the MgO phases had not been formed, and this was indicated by ''×" in Tables 1 to 3.

### (Joining strength test)

A shear strength test for the joining layer was performed to the resulting metal-ceramic joint body (Samples 1 to 38). In this test, first, for the resulting Samples 1 to 38, the metal component was machined into a cylindrical shape with a diameter of 3 mm and a height of 2 mm, exposing the surface of the ceramic component outside the joining area, thus creating a test specimen. Then, as shown in Fig. 8, with the ceramic component of the test specimen fixed in place, a cylindrical metal component was pressed against it along a direction parallel to the joining surface using a displacement fixture, and a stress level at which the joining layer fractured (shear failure) was measured. Based on this value, the shear strength of the joining layer was calculated. For the shear test, the position of the test fixture (contact height H of a displacement fixture) was set at 200 µm above the exposed surface of the ceramic component, and a movement speed of a displacement axis was set at 100 µm/s. Further, a tensile strength was calculated based on the obtained shear strength, and the values of both shear strength and tensile strength are shown in Tables 1 to 3.

### (Reliability test)

A thermal cycle test was performed to the resulting metal-ceramic joint body (Samples 1 to 38). For the test conditions, 200 cycles of a thermal cycle consisting of 30 minutes at -50°C followed by 30 minutes at 150°C, were performed. Every 50 cycles, the scanning acoustic tomography (SAT) inspection was performed to determine whether there was any cracking of the ceramic component or peeling of the metal component. In Tables 1 to 3, "o" indicates that no cracking of the ceramic component and peeling of the metal component were observed. "△" indicates that partial cracking of the ceramic component or partial peeling of the metal component was observed. "×" indicates that significant cracking of the ceramic component or significant peeling of the metal component was observed.

**[Table 1]**

| Sample No. | Brazing material | | | Ceramic component | Joining condition | | Evaluation | | | |
|---|---|---|---|---|---|---|---|---|---|---|
| | Cu | Mg | Ti | | Joining temperature | Atmosphere | MgO phases | Shearing strength [MPa] | Tensile strength [MPa] | Thermal cycle reliability |
| 1 | 77 | 20 | 3 | Si3N4 | 740°C | Vacuum | ○ | 71.4 | 123.7 | ○ |
| 2 | 79 | 18 | 3 | Si3N4 | 740°C | Vacuum | ○ | 72.0 | 124.7 | ○ |
| 3 | 81 | 16 | 3 | Si3N4 | 740°C | Vacuum | ○ | 71.2 | 123.3 | ○ |
| 4 | 83 | 14 | 3 | Si3N4 | 740°C | Vacuum | ○ | 62.6 | 108.4 | ○ |
| 5 | 85 | 12 | 3 | Si3N4 | 740°C | Vacuum | ○ | 63.0 | 109.1 | ○ |
| 6 | 77 | 20 | 3 | AlN | 740°C | Vacuum | ○ | 66.2 | 114.7 | ○ |
| 7 | 81 | 16 | 3 | AlN | 740°C | Vacuum | ○ | 60.8 | 105.4 | ○ |
| 8 | 85 | 12 | 3 | AlN | 740°C | Vacuum | ○ | 66.3 | 114.9 | ○ |
| 9 | 77 | 20 | 3 | Al2O3 | 740°C | Vacuum | ○ | 44.5 | 77.1 | ○ |
| 10 | 81 | 16 | 3 | Al2O3 | 740°C | Vacuum | ○ | 46.1 | 79.9 | ○ |
| 11 | 85 | 12 | 3 | Al2O3 | 740°C | Vacuum | ○ | 47.4 | 82.0 | ○ |
| 12 | 77 | 20 | 3 | Si3N4 | 760°C | Vacuum | ○ | 76.6 | 132.7 | ○ |
| 13 | 81 | 16 | 3 | Si3N4 | 760°C | Vacuum | ○ | 76.0 | 131.6 | ○ |

**[Table 2]**

| Sample No. | Brazing material | | | Ceramic component | Joining condition | | Evaluation | | | |
|---|---|---|---|---|---|---|---|---|---|---|
| | Cu | Mg | Ti | | Joining temperature | Atmosphere | MgO phases | Shearing strength [MPa] | Tensile strength [MPa] | Thermal cycle reliability |
| 14 | 85 | 12 | 3 | Si3N4 | 760°C | Vacuum | ○ | 64.0 | 110.9 | ○ |
| 15 | 77 | 20 | 3 | Si3N4 | 780°C | Vacuum | ○ | 75.8 | 131.3 | ○ |
| 16 | 81 | 16 | 3 | Si3N4 | 780°C | Vacuum | ○ | 82.6 | 143.1 | ○ |
| 17 | 85 | 12 | 3 | Si3N4 | 780°C | Vacuum | ○ | 65.5 | 113.4 | ○ |
| 18 | 77 | 20 | 3 | Si3N4 | 800°C | Vacuum | ○ | 69.0 | 119.5 | ○ |
| 19 | 79 | 18 | 3 | Si3N4 | 800°C | Vacuum | ○ | 81.7 | 141.5 | ○ |
| 20 | 81 | 16 | 3 | Si3N4 | 800°C | Vacuum | ○ | 87.6 | 151.7 | ○ |
| 21 | 83 | 14 | 3 | Si3N4 | 800°C | Vacuum | ○ | 85.9 | 148.8 | ○ |
| 22 | 85 | 12 | 3 | Si3N4 | 800°C | Vacuum | ○ | 77.0 | 133.4 | ○ |
| 23 | 77 | 20 | 3 | AlN | 800°C | Vacuum | ○ | 126.6 | 219.2 | ○ |
| 24 | 81 | 16 | 3 | AlN | 800°C | Vacuum | ○ | 125.7 | 217.7 | ○ |
| 25 | 85 | 12 | 3 | AlN | 800°C | Vacuum | ○ | 75.4 | 130.6 | ○ |
| 26 | 77 | 20 | 3 | Al2O3 | 800°C | Vacuum | ○ | 134.1 | 232.3 | ○ |

**[Table 3]**

| Sample No. | Brazing material | | | Ceramic component | Joining condition | | Evaluation | | | |
|---|---|---|---|---|---|---|---|---|---|---|
| | Cu | Mg | Ti | | Joining temperature | Atmosphere | MgO phases | Shearing strength [MPa] | Tensile strength [MPa] | Thermal cycle reliability |
| 27 | 81 | 16 | 3 | Al2O3 | 800°C | Vacuum | ○ | 139.9 | 242.4 | ○ |
| 28 | 85 | 12 | 3 | Al2O3 | 800°C | Vacuum | ○ | 110.9 | 192.1 | ○ |
| 29 | 77 | 20 | 3 | Si3N4 | 820°C | Vacuum | ○ | 60.9 | 105.5 | ○ |
| 30 | 81 | 16 | 3 | Si3N4 | 820°C | Vacuum | ○ | 85.0 | 147.2 | ○ |
| 31 | 85 | 12 | 3 | Si3N4 | 820°C | Vacuum | ○ | 83.1 | 143.9 | ○ |
| 32 | 77 | 20 | 3 | Si3N4 | 840°C | Vacuum | ○ | 64.0 | 110.9 | ○ |
| 33 | 79 | 18 | 3 | Si3N4 | 840°C | Vacuum | ○ | 72.0 | 124.7 | ○ |
| 34 | 81 | 16 | 3 | Si3N4 | 840°C | Vacuum | ○ | 91.8 | 159.0 | ○ |
| 35 | 83 | 14 | 3 | Si3N4 | 840°C | Vacuum | ○ | 92.2 | 159.7 | ○ |
| 36 | 85 | 12 | 3 | Si3N4 | 840°C | Vacuum | ○ | 87.0 | 150.7 | ○ |
| 37 | 77 | 20 | 3 | Si3N4 | 740°C | Vacuum | × | 37.2 | 64.4 | Δ |
| 38 | 0 | 97 | 3 | Si3N4 | 820°C | Vacuum | × | 0.5 | 0.9 | × |

As shown in Tables 1 to 3, in Samples 1 to 36, where non-layered MgO phases were formed in the joining layer (first layer), the joining strength was high, and no cracking of the ceramic component and peeling of the metal component were observed even after the thermal cycling test. On the other hand, in Sample 37, where the MgO phases were not formed in the joining layer (first layer), the joining strength was somewhat lower, and partial cracking of the ceramic component and partial peeling of the metal component were observed during the thermal cycle test. Further, in Sample 38, where copper was not used as a raw material for the brazing material, the joining strength was significantly low and the thermal cycle reliability was poor. In conclusion, it has confirmed that by forming the non-layered MgO phases in the joining layer (first layer), a metal-ceramic joint body with high joining strength and high thermal cycle reliability can be obtained.

### <Preferable aspects of the present disclosure>

The following describes preferable aspects of the present disclosure. These aspects can be combined with each other.

According to a first aspect of the present disclosure, there is provided a metal-ceramic joint body including:
a metal component:
a ceramic component joined to the metal component; and
a joining layer on an interface between the metal component and the ceramic component, containing Cu and Mg, and further containing at least one active metal element selected from the group consisting of Ti, Zr, Hf, V, Nb, Ta, Cr, Mo, W, Ca, Y, Ce, La, Sm, Yb, Nd, Gd, and Er,
wherein non-layered MgO phases containing MgO is present in the joining layer.

Preferably, the joining layer includes:
a first layer that defines an interface with the metal component, containing a solid solution phase where Mg is dissolved in Cu, and a compound phase having an intermetallic compound containing Cu and Mg; and
a second layer that defines an interface with the ceramic component, containing a compound of the active metal element, and is in contact with the first layer, wherein the non-layered MgO phases are present in the first layer.

Preferably, the MgO phases are present in such a way that it surrounds at least one of the solid solution phase and the compound phase.

Preferably, within a region surrounded by the MgO phases, a proportion of the solid solution phase is 90% or more, or a proportion of the compound phase is 90% or more.

Preferably, in a cross-section of the first layer, an area ratio of the MgO phases is 5% or more and 15% or less.

Preferably, when an area ratio of the MgO phases in a 500 µm² area of the cross-section of the first layer is measured multiple times using different observation fields, a difference between maximum and minimum values of the area ratio of the MgO phases is within 5%.

Preferably, regarding the MgO phases, an electron energy loss spectrum obtained by scanning transmission electron microscopy exhibits peaks in a range of 50 to 80 eV and 530 to 560 eV.

Preferably, the joining layer contains 50 to 80 at.% of Cu, 5 to 20 at.% of Mg, and a total of 0.1 to 10 at.% of the active metal elements.

Preferably, when observing the first layer in a cross-sectional view perpendicular to the joining surface, the number of voids with a circle-equivalent diameter of 8 µm or more is less than one per 10,000 µm².

Preferably, when subjected to 200 cycles of a thermal cycling test consisting of 30 minutes at -50°C followed by 30 minutes at 150°C, no cracking of the ceramic component and peeling of the metal component are observed.

According to another aspect of the present disclosure, there is provided a brazing material that is used for joining a metal component and a ceramic component, containing 50 to 80 at.% of Cu, 5 to 20 at.% of Mg, and a total of 0.1 to 10 at.% of at least one active metal element selected from the group consisting of Ti, Zr, Hf, V, Nb, Ta, Cr, Mo, W, Ca, Y, Ce, La, Sm, Yb, Nd, Gd, and Er, wherein the Mg is contained at least a part of which is in the form of MgO, and the Cu and the Mg are contained with an average particle size of 45 µm or less.

According to another aspect of the present disclosure, there is provided a method for manufacturing a metal-ceramic joint body, the method including:
arranging a metal component and a ceramic component in a layered body, with a brazing material interposed therebetween; and
heating and holding the layered body of the metal component and the ceramic component while applying pressure in a layering direction;
wherein a hydrogen reduction treatment is applied to the brazing material using a material as the brazing material containing 50 to 80 at.% of Cu, 5 to 20 at.% of Mg, and a total of 0.1 to 10 at.% of at least one active metal element selected from the group consisting of Ti, Zr, Hf, V, Nb, Ta, Cr, Mo, W, Ca, Y, Ce, La, Sm, Yb, Nd, Gd, and Er, with the Mg contained at least a part of which is in the form of MgO, and the Cu and the Mg contained with an average particle size of 45 µm or less.

According to another aspect of the present disclosure, there is provided a method for manufacturing a brazing material, which is a method for manufacturing a brazing material that is used to join a metal component and a ceramic component, containing 50 to 80 at.% of Cu, 5 to 20 at.% of Mg, and a total of 0.1 to 10 at.% of at least one active metal element selected from the group consisting of Ti, Zr, Hf, V, Nb, Ta, Cr, Mo, W, Ca, Y, Ce, La, Sm, Yb, Nd, Gd, and Er, wherein the Mg is contained at least a part of which is in the form of MgO, and the Cu and the Mg are used in the form of powder with an average particle size of 45 µm or less.

Preferably, Mg with its surface subjected to a surface oxidation treatment to obtain MgO, is used as the Mg.

### Description of Signs and Numerals

100 Metal-ceramic joint body
100' Layered body
10 Metal component
10s Joining surface
20 Ceramic component
20s Joining surface
30 Joining layer
31 First layer
31A Solid solution phase
31B Compound phase
32 Second layer
33 MgO phase
34S Void (circle-equivalent diameter of less than 8 µm)
34L Void (circle-equivalent diameter of 8 µm or more)
50 Brazing material

## Claims

1. A metal-ceramic joint body including:
a metal component;
a ceramic component joined to the metal component; and
a joining layer on joining surfaces of the metal component and the ceramic component, the joining layer containing Cu and Mg and further containing at least one active metal element selected from the group consisting of Ti, Zr, Hf, V, Nb, Ta, Cr, Mo, W, Ca, Y, Ce, La, Sm, Yb, Nd, Gd, and Er,
wherein non-layered MgO phases containing MgO are present in the joining layer.

2. The metal-ceramic joint body according to claim 1, wherein the joining layer includes:
a first layer that defines an interface with the metal component, containing a solid solution phase where Mg is dissolved in Cu, and a compound phase having an intermetallic compound containing Cu and Mg; and
a second layer that defines an interface with the ceramic component, containing a compound of the active metal element, and is in contact with the first layer,
wherein the non-layered MgO phases are present in the first layer.

3. The metal-ceramic joint body according to claim 2, wherein the MgO phases are present in such a way that it surrounds at least one of the solid solution phase and the compound phase.

4. The metal-ceramic joint body according to claim 2, wherein within a region surrounded by the MgO phases, a proportion of the solid solution phase is 90% or more, or a proportion of the compound phase is 90% or more.

5. The metal-ceramic joint body according to claim 2, wherein in a cross-section of the first layer, an area ratio of the MgO phases is 5% or more and 15% or less.

6. The metal-ceramic joint body according to claim 2, wherein when an area ratio of the MgO phases in a 500 µm² area of the cross-section of the first layer is measured multiple times using different observation fields, a difference between maximum and minimum values of the area ratio of the MgO phases is within 5%.

7. The metal-ceramic joint body according to claim 1, wherein regarding the MgO phases, an electron energy loss spectrum obtained by scanning transmission electron microscopy exhibits peaks in a range of 50 eV or more and 80 eV or less and 530 eV or more and 560 eV or less.

8. The metal-ceramic joint body according to claim 1, wherein the joining layer contains 50 at.% or more and 80 at.% or less of Cu, 5 at.% or more and 20 at. % or less of Mg, and a total of 0.1 at. % or more and 10 at.% or less of the active metal elements.

9. The metal-ceramic joint body according to claim 2, wherein when observing the first layer in a cross-sectional view perpendicular to a joining surface, the number of voids with a circle-equivalent diameter of 8 µm or more is less than one per 10,000 µm².

10. The metal-ceramic joint body according to claim 1, wherein when subjected to 200 cycles of a thermal cycling test consisting of 30 minutes at -50°C followed by 30 minutes at 150°C, no cracking of the ceramic component and peeling of the metal component are observed.

11. A brazing material that is used to join a metal component and a ceramic component, containing 50 at. % or more and 80 at.% or less of Cu, 5 at. % or more and 20 at.% or less of Mg, and a total of 0.1 at.% or more and 10 at.% or less of at least one active metal element selected from the group consisting of Ti, Zr, Hf, V, Nb, Ta, Cr, Mo, W, Ca, Y, Ce, La, Sm, Yb, Nd, Gd, and Er,
wherein the Mg is contained at least a part of which is in the form of MgO, and
the Cu and the Mg are contained with an average particle size of 45 µm or less.

12. A method for manufacturing a metal-ceramic joint body, the method comprising:
arranging a metal component and a ceramic component in a layered body, with a brazing material interposed therebetween; and
heating and holding the layered body of the metal component and the ceramic component while applying pressure in a layering direction,
wherein a hydrogen reduction treatment is applied to the brazing material using a material as the brazing material containing 50 at.% or more and 80 at.% or less of Cu, 5 at.% or more and 20 at.% or less of Mg, and a total of 0.1 at.% or more and 10 at.% or less of at least one active metal element selected from the group consisting of Ti, Zr, Hf, V, Nb, Ta, Cr, Mo, W, Ca, Y, Ce, La, Sm, Yb, Nd, Gd, and Er, with the Mg contained at least a part of which is in the form of MgO, and the Cu and the Mg contained with an average particle size of 45 µm or less.

13. A method for manufacturing a brazing material, which is a method for manufacturing a brazing material that is used to join a metal component and a ceramic component, containing 50 at.% or more and 80 at.% or less of Cu, 5 at.% or more and 20 at.% or less of Mg, and a total of 0.1 at.% or more and 10 at.% or less of at least one active metal element selected from the group consisting of Ti, Zr, Hf, V, Nb, Ta, Cr, Mo, W, Ca, Y, Ce, La, Sm, Yb, Nd, Gd, and Er,
wherein the Mg is contained at least a part of which is in the form of MgO, and
the Cu and the Mg are used in the form of powder with an average particle size of 45 µm or less.

14. The method for manufacturing a brazing material according to claim 13, wherein Mg with its surface subjected to a surface oxidation treatment to obtain MgO, is used as the Mg.
